# EUROPÄISCHE PATENTSCHRIFT

(11) **EP 3 444 065 B1**
(45) Veröffentlichungstag und Bekanntmachung des Hinweises auf die Patenterteilung: **01.09.2021**
(21) Anmeldenummer: 18175772.5
(22) Anmeldetag: 04.06.2018
(51) Int. Cl.: B23Q 1/00, B25B 1/02, B25B 1/08

(54) **NULLPUNKTSPANNMODUL**
NEUTRAL POINT TENSIONING MODULE
MODULE DE SERRAGE POINT ZÉRO

(30) Priorität: 02.06.2017 DE 102017112272
(43) Veröffentlichungstag der Anmeldung: 20.02.2019
(73) Patentinhaber: Schunk GmbH & Co. KG Spann- und Greiftechnik, 74348 Lauffen am Neckar (DE)
(72) Erfinder: SCHRÄDER, Philipp, 88512 Mengen-Blochingen (DE); WILD, Marc, 72505 Krauchenwies (DE)
(74) Vertreter: DREISS Patentanwälte PartG mbB

(56) Entgegenhaltungen:
- DE-C- 882 790
- JP-U- H0 319 608
- US-A- 1 766 276

## Beschreibung

Die Erfindung betrifft ein Nullpunktspannmodul mit einem Grundkörper, mit einer im Grundkörper vorgesehenen Spannaufnahme zur Aufnahme eines Spannelements, insbesondere eines Spannbolzens oder eines Spannrings, mit in radialer Richtung zu einer Mittellängsachse, im Grundkörper geführt verlagerbaren Spannschiebern und mit einem die Spannschieber betätigenden, um die Mittellängsachse verdrehbar angeordneten Treibring, wobei zur Bewegungskopplung von Treibring und Spannschiebern am Treibring Führungsnuten und an den Spannschiebern in die Führungsnuten eingreifende Eingriffsabschnitte derart vorgesehen sind, dass beim Verdrehen des Treibrings die Spannschieber in radialer Richtung bewegt werden.

Ein derartiges Nullpunktspannmodul ist beispielsweise aus der EP 2 363 225 B1 bekannt. Die Führungsnuten können dabei gekrümmt verlaufen, so dass eine Kraftverstärkung der Spannkraft erfolgt, wenn die Spannschieber den Spannbolzen in der Aufnahme verriegeln. Gerade bei der Übertragung von höheren Spannkräften hat sich allerdings herausgestellt, dass die miteinander zusammenwirkenden Bauteile großen mechanischen Beanspruchungen unterliegen.

Aus US 1 766 276 A, JP H03 19608 U und DE 882 790 C sind Nullpunktspannmodule bekannt, welche Spannschieber mit Aufnahmebohrung aufweisen. In die Aufnahmebohrung sind Zylinderstifte eingesetzt. Hierdurch können hohe Spannkräfte übertragen werden, wobei das

Nullpunktspannmodul auch funktionssicher arbeitet.

Der vorliegenden Erfindung liegt die Aufgabe zugrunde, ein Nullpunktspannmodul der eingangs genannten Art bereitzustellen, bei dem hohe Spannkräfte übertragen werden können und das Nullpunktspannmodul funktionssicher arbeitet, wobei die Komponenten des Nullpunktspannmoduls einfach montiert werden können.

Diese Aufgabe wird gelöst durch ein Nullpunktspannmodul mit den Merkmalen des Patentanspruchs 1. Folglich ist insbesondere vorgesehen, dass die Spannschieber jeweils eine Aufnahmebohrung aufweisen und dass die Eingriffsabschnitte als in die Aufnahmebohrungen eingesetzte Zylinderstifte ausgebildet sind. Hierdurch wird zum einen ein vergleichsweise einfacher Aufbau gewährleistet. Zudem kann eine Übertragung von vergleichsweise hohen Kräften sicher gewährleistet werden. Die Zylinderstifte können dabei aus dem gleichen oder einem anderen Material als die Spannschieber sein. Insbesondere ist denkbar, dass die Zylinderstifte aus gehärtetem Stahl sind. Weiterhin weisen die Führungsnuten jeweils einen geschlossenen Nutgrund mit je einer den Nutgrund durchgreifende Montageausnehmung auf, wobei die jeweilige Montageausnehmung in einer Montageposition des Treibrings axial zur jeweiligen Aufnahmebohrung verlaufend anordenbar ist. Dadurch kann erreicht werden, dass die Zylinderstifte im Betrieb des Nullpunktspannmoduls sicher in der Führungsnut geführt werden. Dennoch kann über die Montageausnehmung der jeweilige Zylinderstift in die Aufnahmebohrung des jeweiligen Spannschiebers eingeführt werden. Vorteilhafterweise ist die Montageausnehmung so angeordnet, dass die Montageposition beim normalen Betrieb des Nullpunktspannmoduls nicht erreicht wird. Die Verdrehung des Treibrings in die Montageposition erfolgt also ausschließlich bei der Montage und nicht im Dauerbetrieb des Nullpunktspannmoduls.

Um eine möglichst geringe Reibung zwischen den Zylinderstiften und den Führungsnuten zu erreichen, ist vorteilhaft, wenn an den Zylinderstiften Lagerbuchsen vorgesehen sind, die mit den Führungsnuten der Lagerbuchse zusammenwirken. Die Zylinderstifte stehen dabei folglich nicht in direktem Kontakt mit den Führungsnuten. Dennoch können vergleichsweise hohe Kräfte übertragen werden.

Der Grundkörper kann in radialer Richtung verlaufende Aufnahmeführungen zur Aufnahme der Spannschieber aufweisen. Die Aufnahmeführungen durchgreifen vorzugsweise den Grundkörper in radialer Richtung. Die Spannschieber können dann bei deren Montage von radial außen in die Aufnahmeführungen eingeschoben und in einem nächsten Montageschritt können die Aufnahmeführungen im radial äußeren Bereich dann verschlossen werden.

Gemäß der Erfindung kann zudem vorgesehen sein, dass auf der den Spannschiebern abgewandten Seite des Treibrings eine Getriebeeinheit vorgesehen ist, die im vorzugsweise endmontierten Zustand die Montageausnehmung abdeckt. Dadurch wird eine sichere Anordnung des Treibrings im Grundkörper gewährleistet. Die Getriebeeinheit dient zum Antrieb des Treibrings und ist mit diesem drehgekoppelt. Auf der Eingangsseite der Getriebeeinheit ist vorzugsweise eine Antriebseinheit, insbesondere ein bürstenloser Gleichstrommotor, vorgesehen. Ebenso ist denkbar, einen pneumatischen Antrieb vorzusehen.

Die Antriebseinheit kann im endmontierten Zustand von einem Deckel abgedeckt sein, wobei im oder am Deckel eine Elektronikeinheit zur Ansteuerung, Regelung und/oder Überwachung der Antriebseinheit vorgesehen ist.

Ferner ist vorteilhaft, wenn die Spannschieber einen runden Querschnitt aufweisen und wenn eine Dichtung vorgesehen ist, die die Spannschieber gegen das Grundgehäuse hin abdichtet. Dadurch kann ein dichtes Nullpunktspannmodul bereitgestellt werden, das auch mit Flüssigkeiten oder Emulsionen beaufschlagt werden kann.

Ferner ist vorteilhaft, wenn die Antriebseinheit und/oder die Elektronikeinheit über eine Übergabeverbindung mit einer maschinentischseitigen Stromschnittstelle verbunden ist. Im montierten Zustand ist die Übergabeverbindung vom Grundkörper wenigstens weitgehend vollständig abgedeckt. Hierdurch kann erreicht werden, dass im Betrieb des Nullpunktspannmoduls die Übergabeverbindung sicher vom Grundkörper geschützt ist. Selbstverständlich ist denkbar, dass eine sichere Abdichtung mittels beispielsweise O-Ringen von Übergabeverbindung und Stromschnittstelle empfehlenswert ist.

Zur sicheren Kontaktierung der Übergabeverbindung mit der Stromschnittstelle ist vorteilhaft, wenn die Übergabeverbindung und/oder die Stromschnittstelle federnd nachgiebige Kontaktstifte aufweist. Dadurch kann sichergestellt werden, dass beim Aufsetzen der Übergabeverbindung auf die Stromschnittstelle einzelne Kontaktstifte unter Vorspannung in elektrischen Kontakt kommen.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: ein an einem Maschinentisch angeordnetes erfindungsgemäßes Nullpunktspannmodul;
- Figur 2: das Nullpunktspannmodul gemäß Figur 1 in Explosionsdarstellung;
- Figur 3: eine Draufsicht auf den Treibring des Nullpunktspannmoduls gemäß Figur 1 und 2; und
- Figur 4: einen Längsschnitt durch das Nullpunktspannmodul gemäß Figur 1 in Montagestellung.

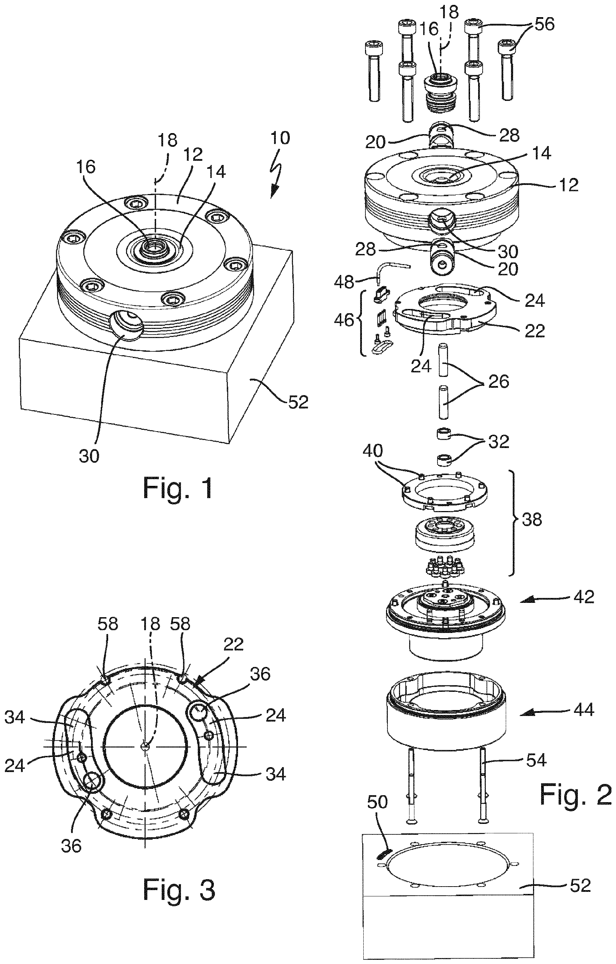

Figur 1 zeigt ein Nullpunktspannmodul 10 mit einem Grundkörper 12 und mit einer im Grundkörper 12 vorgesehenen Spannaufnahme 14 zur Aufnahme eines Spannbolzens 16. Der in der Figur 1 dargestellte Spannbolzen 16 wird im Betrieb des Spannmoduls 10 an ein zu spannendes Bauteil, beispielsweise eine Spannpalette oder unmittelbar an ein zu bearbeitendes Werkstück, angeordnet.

Im Grundkörper 12 sind hin zu einer Mittellängsachse 18 verlagerbare Spannschieber 20 vorgesehen, die in Figur 2 deutlich zu erkennen sind. Die Spannschieber 20 sind dabei in eine radial innere Verriegelungslage sowie in eine radial äußere Entriegelungslage verlagerbar. Bei einer alternativen Ausführungsform wird von der Spannaufnahme 14 nicht ein Spannbolzen 16, sondern ein Spannring aufgenommen, wobei sich dann die Spannschieber in der Verriegelungslage nicht in einer radial inneren, sondern in einer radial äußeren Lage befinden.

Zur Verlagerung der Spannschieber 20 ist ein um die Mittellängsachse 18 verdrehbar angeordneter Treibring 22 vorgesehen, der in Figur 3 in Draufsicht gezeigt ist. Der Treibring 22 weist zwei Führungsnuten 24 auf. In diese Führungsnuten 24 greifen jeweils ein Zylinderstift 26 ein. Die Zylinderstifte 26 sind im montierten Zustand in an den Spannschiebern 20 vorgesehene Aufnahmebohrungen 28 eingesetzt. Im montierten Zustand befinden sich die Spannschieber 20 in am Grundkörper 12 vorgesehenen Aufnahmeführungen 30, die den Grundkörper 12 in radialer Richtung hin zur Spannaufnahme 14 durchgreifen. Die Spannschieber 20 weisen einen runden Querschnitt auf. Zudem kann an den Spannschiebern 20 eine Dichtung vorgesehen sein, welche die Spannschieber 20 gegen die Aufnahmeführung 30 im Grundkörper 12 abdichtet.

Die Anordnung ist dabei derart, dass aufgrund eines Verdrehens des Treibrings 22 die Spannschieber 20 über die Führungsnuten 24 und die Zylinderstifte 26 in radialer Richtung bewegt werden.

Um die Reibung der freien Enden der Zylinderstifte 26 und den Führungsnuten 24 möglichst gering zu halten, sind an den freien Enden der Zylinderstifte 26 Lagerbuchsen 32 vorgesehen, die im montierten Zustand in den Führungsnuten 24 angeordnet sind.

Durch die beschriebene Anordnung können vergleichsweise hohe Kräfte zwischen den sich bewegenden Bauteilen übertragen werden. Der Verlauf der Führungsnuten 24 bezüglich der Mittellängsachse 18 ist dabei derart, dass bei radial innenliegenden Spannschiebern 20 eine Kraftverstärkung erfolgt, so dass die Spannbolzen 16 in der Spannlage mit hoher Kraft beaufschlagt werden.

Wie insbesondere aus Figur 3 deutlich wird, weisen die beiden Führungsnuten 24 einen geschlossenen Nutgrund 34 auf, in dem je eine den Nutgrund 34 durchgreifende Montageausnehmung 36 vorgesehen ist. Die Montageausnehmung 36 ist dabei derart, dass die Zylinderstifte 26 in einer Montageposition des Treibrings 22 durch die Montageausnehmungen 36 in die Aufnahmebohrungen 28 eingeschoben werden können.

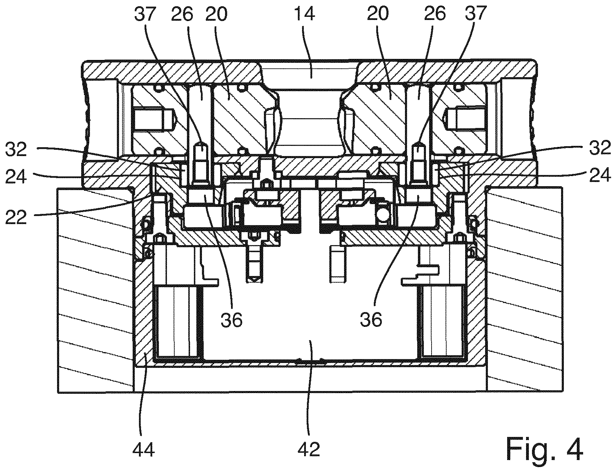

Die Montageposition ist dabei in Figur 4 im Längsschnitt gezeigt. Die Zylinderstifte 26 befinden sich dabei axial oberhalb der Montageausnehmungen 36 der Führungsnuten 24. Die Zylinderstifte 26 weisen an den der jeweiligen Montageausnehmung 36 zugewandten Enden eine Gewindebohrung 37 auf, mittels welcher der jeweilige Zylinderstift 26 demontiert werden kann. Ein Hilfswerkzeug kann in die jeweilige Gewindebohrung 37 eingeschraubt werden, um den jeweiligen Zylinderstift 26 aus der Aufnahmebohrung 28 herauszuziehen.

Wie aus Figur 2 deutlich wird, ist auf der den Spannschiebern 20 abgewandten Seite des Treibrings 22 eine Getriebeeinheit 38 vorgesehen, die an ihrer Abtriebsseite Abtriebszapfen 40 vorsieht, welche in treibringseitige Ausnehmungen im montierten Zustand eintauchen, so dass der Treibring 22 mit den Abtriebszapfen 40 drehgekoppelt ist.

Zum Antrieb der Getriebeeinheit 38 ist ein Elektromotor 42 vorgesehen, der insbesondere als bürstenloser Gleichstrommotor ausgebildet sein kann. Der Elektromotor 42 wird im montierten Zustand von einem Deckel 44 abgedeckt, innerhalb dessen eine Steuereinheit zur Ansteuerung des Elektromotors 42 vorgesehen ist. Zur elektrischen Kontaktierung des Elektromotors 42 und der im Deckel 44 vorgesehenen Steuereinheit ist eine Übergabeverbindung 46 vorgesehen, welche über ein Kabel 48 mit dem Elektromotor 42 bzw. mit dem Deckel 44 verbunden ist. Die Übergabeverbindung 46 ihrerseits wird mit einer Stromschnittstelle 50 verbunden, die an einem Maschinentisch 52 vorgesehen ist, in welchen das Nullpunktspannmodul 10 einsetzbar ist. Im eingesetzten Zustand, wie er in Figur 1 gezeigt ist, deckt der Grundkörper 12 die Stromschnittstelle 50 vollständig ab.

Zur sicheren Befestigung des Deckels 44 sind Befestigungsschrauben 54 vorgesehen. Zur sicheren Befestigung des gesamten Nullpunktspannmoduls 10 am Maschinentisch 52 sind Befestigungsschrauben 56 vorgesehen.

Wie aus Figur 3 deutlich wird, ist die Montageausnehmung 36 in einem Endabschnitt der jeweiligen Führungsnut 34 vorgesehen. Durch Verdrehen des Treibrings 22 in die Montageposition können die Zylinderstifte 26 durch die Montageausnehmung von unten in den jeweiligen Spannschieber 20 eingeschoben werden.

Die Montage des Nullpunktspannmoduls 10 gestaltet sich wie folgt.

Zunächst werden die Spannschieber 20 mit den Dichtungen von radial außen in die Aufnahmeführungen 30 eingeschoben. Danach wird der Treibring 22 von axial unten in das Grundgehäuse 12 eingesetzt. Der Treibring 22 wird dann in die Montageposition verdreht, so dass dessen Montageausnehmungen 36 axial zu den Aufnahmebohrungen 28 der Spannschieber 20 verlaufend angeordnet sind. In dieser Position können dann die Zylinderstifte 26 durch die Montageausnehmung 36 in die Aufnahmebohrungen 28 eingeschoben werden. In einem nächsten Schritt wird der Treibring 22 aus der Montageposition weg gedreht, so dass die Zylinderstifte 26 gesichert sind.

Am radial äußeren Bereich des Treibrings 22 sind Ausnehmungen 58 vorgesehen, in die Anschlagschrauben eingeschraubt werden, die ein Rückdrehen des Treibrings 22 in die Montageposition verhindern.

Schließlich wird die Getriebeeinheit 38, der Elektromotor 42 und der Deckel 44 aufgesetzt und mittels den Schrauben 54 am Grundgehäuse 12 befestigt. Danach wird das Nullpunktspannmodul 10 in den Maschinentisch 52 eingesetzt, wobei die Übergabeverbindung 46 mit der maschinentischseitigen Stromschnittstelle 50 kontaktiert und abgedeckt wird.

## Patentansprüche

1. Nullpunktspannmodul (10), mit einem Grundkörper (12), mit einer im Grundkörper (12) vorgesehenen Spannaufnahme (14) zur Aufnahme eines Spannelements (16), mit in radialer Richtung zu einer Mittellängsachse (18), im Grundkörper (12) geführt verlagerbaren Spannschiebern (20), und mit einem die Spannschieber (20) betätigenden, um die Mittellängsachse (18) verdrehbar angeordneter Treibring (22), wobei zur Bewegungskopplung von Treibring (22) und Spannschiebern (20) am Treibring (22) Führungsnuten (24) und an den Spannschiebern (20) in die Führungsnuten (24) eingreifende Eingriffsabschnitte derart vorgesehen sind, dass beim Verdrehen des Treibrings (22) die Spannschieber (20) in radialer Richtung bewegt werden, wobei die Spannschieber (20) jeweils eine Aufnahmebohrung (28) aufweisen und wobei die Eingriffsabschnitte als in die Aufnahmebohrungen (28) eingesetzte Zylinderstifte (26) ausgebildet sind, **dadurch gekennzeichnet, dass** die Führungsnuten (24) jeweils einen geschlossenen Nutgrund (34) mit je einer den Nutgrund (34) durchgreifenden Montageausnehmung (36) aufweisen, wobei die jeweilige Montageausnehmung (36) in einer Montageposition des Treibrings axial zur jeweiligen Aufnahmebohrung (30) verlaufend anordenbar ist.

2. Nullpunktspannmodul (10) nach Anspruch 1, **dadurch gekennzeichnet, dass** an den Zylinderstiften (26) die Zylinderstifte (26) abschnittsweise umgebende Lagerbuchsen (32) derart vorgesehen sind, dass die Zylinderstifte (26) über die Lagerbuchsen (32) mit den Führungsnuten (24) zusammenwirken.

3. Nullpunktspannmodul (10) nach Anspruch 1 oder 2, **dadurch gekennzeichnet, dass** der Grundkörper (12) in radialer Richtung verlaufende Aufnahmeführungen (30) zur Aufnahme der Spannschieber (20) aufweist.

4. Nullpunktspannmodul (10) nach Anspruch 1, 2 oder 3, **dadurch gekennzeichnet, dass** auf der den Spannschiebern (20) abgewandten Seite des Treibrings (22) eine Getriebeeinheit (38) vorgesehen ist.

5. Nullpunktspannmodul (10) nach Anspruch 4, **dadurch gekennzeichnet, dass** auf der den Spannschiebern (20) abgewandten Seite der Getriebeeinheit (38) im endmontierten Zustand eine Antriebseinheit (42) vorgesehen ist.

6. Nullpunktspannmodul (10) nach Anspruch 5, **dadurch gekennzeichnet, dass** die Antriebseinheit (42) im endmontierten Zustand von einem Deckel (44) abgedeckt ist, wobei im oder am Deckel (44) eine Elektronikeinheit zur Ansteuerung, Regelung und/oder Überwachung der Antriebseinheit (42) vorgesehen ist.

7. Nullpunktspannmodul (10) nach Anspruch 6, **dadurch gekennzeichnet, dass** die Antriebseinheit (42) und/oder die Elektronikeinheit über eine Übergabeverbindung (46) mit einer maschinentischseitigen Stromschnittstelle im montierten Zustand verbunden ist, wobei die Übergabeverbindung im montierten Zustand vom Grundkörper (12) wenigstens weitgehend vollständig abgedeckt ist.

8. Nullpunktspannmodul (10) nach Anspruch 7, **dadurch gekennzeichnet, dass** die Übergabeverbindung (46) und/oder die Stromschnittstelle (50) federnd nachgiebige Kontaktstifte aufweist.

9. Nullpunktspannmodul (10) nach einem der vorhergehenden Ansprüche, **dadurch gekennzeichnet, dass** die Spannschieber (20) einen runden Querschnitt aufweisen und dass Dichtungen vorgesehen ist, die die Spannschieber (20) gegen das Grundgehäuse (12) hin abdichten.

## Claims

1. Zero-point clamping module (10) comprising a main body (12), a clamping receptacle (14) provided in the main body (12) for receiving a clamping element (16), clamping slides (20) which, guided in the main body (12), are movable in the radial direction with respect to a central longitudinal axis (18), and a driving ring (22) which actuates the clamping slides (20) and is arranged so as to be rotatable about the central longitudinal axis (18), wherein, for movement coupling the driving ring (22) and clamping slides (20), guide grooves (24) are arranged on the driving ring (22) and engagement portions engaging in the guide grooves (24) are provided on the clamping slides (20) such that, when the drive ring (22) is rotated, the clamping slides (20) are moved in the radial direction, wherein the clamping slides (20) each have a receiving bore (28) and wherein the engagement portions are designed as cylindrical pins (26) inserted into the receiving bores (28), **characterized in that** the guide grooves (24) each have a closed groove bottom (34), in each case having a mounting recess (36) passing through the groove bottom (34), wherein the relevant mounting recess (36) can be arranged so as to extend axially with respect to the relevant receiving bore (30) in a mounting position of the drive ring.

2. Zero-point clamping module (10) according to claim 1, **characterized in that** bearing bushes (32) which surround the cylinder pins (26) in portions are provided on the cylinder pins (26) in such a way that the cylinder pins (26) interact with the guide grooves (24) via the bearing bushes (32).

3. Zero-point clamping module (10) according to either claim 1 or claim 2, **characterized in that** the main body (12) has receiving guides (30) extending in the radial direction for receiving the clamping slides (20).

4. Zero-point clamping module (10) according to claim 1, 2 or 3, **characterized in that** a transmission unit (38) is provided on the side of the drive ring (22) facing away from the clamping slides (20).

5. Zero-point clamping module (10) according to claim 4, **characterized in that** a drive unit (42) is provided on the side of the transmission unit (38) facing away from the clamping slides (20) in the final assembled state.

6. Zero-point clamping module (10) according to claim 5, **characterized in that** the drive unit (42) is covered by a cover (44) in the final assembled state, wherein an electronic unit for open-loop control, closed-loop control and/or monitoring of the drive unit (42) is provided in or on the cover (44).

7. Zero-point clamping module (10) according to claim 6, **characterized in that** the drive unit (42) and/or the electronics unit is connected via a transfer connection (46) to a machine table-side current interface in the assembled state, wherein the transfer connection is at least largely completely covered by the main body (12) in the assembled state.

8. Zero-point clamping module (10) according to claim 7, **characterized in that** the transfer connection (46) and/or the current interface (50) has resiliently flexible contact pins.

9. Zero-point clamping module (10) according to any of the preceding claims, **characterized in that** the clamping slides (20) have a round cross section and **in that** seals are provided which seal the clamping slides (20) with respect to the main housing (12).

## Revendications

1. Module de serrage à point zéro (10), comprenant un corps de base (12), comprenant un logement de serrage (14) prévu dans le corps de base (12) pour recevoir un élément de serrage (16), comprenant des coulisseaux de serrage (20) qui peuvent être déplacés de manière guidée dans le corps de base (12) dans la direction radiale par rapport à un axe longitudinal central (18), et comprenant un anneau d'entraînement (22) qui actionne les coulisseaux de serrage (20) et est disposé de manière à pouvoir tourner autour de l'axe longitudinal central (18), des rainures de guidage (24) étant prévues au niveau de l'anneau d'entraînement (22) et des sections de mise en prise venant en prise dans les rainures de guidage (24) étant prévues au niveau des coulisseaux de serrage (20) pour l'accouplement en mouvement de l'anneau d'entraînement (22) et des coulisseaux de serrage (20), de telle manière que, lors de la rotation de l'anneau d'entraînement (22), les coulisseaux de serrage (20) sont déplacés dans la direction radiale, les coulisseaux de serrage (20) présentant chacun un alésage de réception (28), et les sections de mise en prise étant réalisées sous forme de goupilles cylindriques (26) insérées dans les alésages de réception (28), **caractérisé en ce que** les rainures de guidage (24) présentent chacune un fond de rainure (34) fermé comprenant un évidement de montage (36) respectif traversant le fond de rainure (34), l'évidement de montage (36) respectif pouvant être disposé dans une position de montage de l'anneau d'entraînement en s'étendant axialement par rapport à l'alésage de réception (30) respectif.

2. Module de serrage à point zéro (10) selon la revendication 1, **caractérisé en ce que** des coussinets (32) entourant les goupilles cylindriques (26) dans certaines régions sont prévus au niveau des goupilles cylindriques (26) de telle manière que les goupilles cylindriques (26) coopèrent avec les rainures de guidage (24) par l'intermédiaire des coussinets (32).

3. Module de serrage à point zéro (10) selon la revendication 1 ou 2, **caractérisé en ce que** le corps de base (12) présente des guides de réception (30) s'étendant dans la direction radiale pour recevoir les coulisseaux de serrage (20).

4. Module de serrage à point zéro (10) selon la revendication 1, 2 ou 3, **caractérisé en ce qu'**une unité de transmission (38) est prévue sur le côté de l'anneau d'entraînement (22) opposé aux coulisseaux de serrage (20).

5. Module de serrage à point zéro (10) selon la revendication 4, **caractérisé en ce qu'**une unité de propulsion (42) est prévue sur le côté de l'unité de transmission (38) opposé aux coulisseaux de serrage (20) à l'état monté final.

6. Module de serrage à point zéro (10) selon la revendication 5, **caractérisé en ce que** l'unité de propulsion (42), à l'état monté final, est recouverte d'un couvercle (44), une unité électronique étant prévue dans le couvercle (44) ou sur celui-ci pour commander, régler et/ou surveiller l'unité de propulsion (42).

7. Module de serrage à point zéro (10) selon la revendication 6, **caractérisé en ce que** l'unité de propulsion (42) et/ou l'unité électronique sont connectées par l'intermédiaire d'une connexion de transfert (46) à une interface de courant du côté de la table de machine à l'état monté, la connexion de transfert étant au moins sensiblement recouverte par le corps de base (12) à l'état monté.

8. Module de serrage à point zéro (10) selon la revendication 7, **caractérisé en ce que** la connexion de transfert (46) et/ou l'interface de courant (50) présentent des goupilles de contact élastiques.

9. Module de serrage à point zéro (10) selon l'une des revendications précédentes, **caractérisé en ce que** les coulisseaux de serrage (20) présentent une section transversale ronde et **en ce que** des joints d'étanchéité sont prévus, lesquels joints d'étanchéité scellent les coulisseaux de serrage (20) contre le boîtier de base (12).
